Europäisches Patentamt

European Patent Office

Office européen des brevets

(11) Veröffentlichungsnummer: **0 460 464 A2**

# (12) EUROPÄISCHE PATENTANMELDUNG

(21) Anmeldenummer: 91108428.3

(22) Anmeldetag: 24.05.91

(51) Int. Cl.5: **F01P 5/04**, B62D 5/07

(30) Priorität: 02.06.90 DE 4017883

(43) Veröffentlichungstag der Anmeldung:
**11.12.91 Patentblatt 91/50**

(84) Benannte Vertragsstaaten:
**DE ES FR GB IT**

(71) Anmelder: VOLKSWAGEN
AKTIENGESELLSCHAFT

**W-3180 Wolfsburg(DE)**

(72) Erfinder: **Hruschka, Bernd, Dipl.-Ing.**
**Im Seumel 52**
**W-3300 Braunschweig(DE)**
Erfinder: **Leineweber, Günter**
**Benzstrasse 16b**
**W-3170 Gifhorn(DE)**
Erfinder: **Warnecke, Rolf, Dipl.-Ing.**
**Kleimannsruh 3**
**W-3170 Gifhorn(DE)**

(54) **Kraftfahrzeug mit einem Lüfter für das Kühlsystem seiner Brennkraftmaschine und mit einer hydraulischen Servo-Lenkeinrichtung des Durchflusstyps.**

(57) Die Erfindung betrifft ein Kraftfahrzeug mit einer hydraulischen Servo-Lenkeinrichtung des Durchfluß- typs, welche von einer von der Brennkraftmaschine angetriebenen Hydropumpe unter Einsatz eines Strom- bzw. Mengenreglers mit konstantem Hydrau- liköistrom gespeist wird. Um ein kostengünstiges leistungsstarkes Lüftersystem zu schaffen, das auch für schwierige Bauraumverhältnisse im Motorraum flexibel genug ist, wird der Lüfter des Kühlsystems der Brennkraftmaschine durch einen Hydromotor an- getrieben, welcher nicht von einer eigenen, sondern von der Hydropumpe der hydraulischen Servo-Lenk- einrichtung gespeist wird, wobei der Hydromotor, die hydraulische Servo-Lenkeinrichtung und der Strom- bzw. Mengenregler derart in Reihe geschaltet sind, daß dem Hydromotor ein pumpendrehzahlproportio- naler und der hydraulischen Servo-Lenkeinrichtung ein konstanter Hydrauliköistrom zugeführt wird.

Die Erfindung betrifft ein Kraftfahrzeug mit einem Lüfter für das Kühlsystem seiner Brennkraftmaschine und mit einer hydraulischen Servo-Lenkeinrichtung des Durchflußtyps der im Oberbegriff des Patentanspruchs 1 genannten Art, wie es allgemein bekannt ist.

Für hydraulische Servo-Lenkeinrichtungen des Durchflußtyps ist es charakteristisch, daß die i. a. von der Brennkraftmaschine angetriebene Hydropumpe einen ständigen Hydraulikölstrom fördert, der bei nicht betätigter Lenkung - im wesentlichen drucklos - an den hydraulischen Stellgliedern der Servo-Lenkeinrichtung vorbeigeleitet wird, und daß die hydraulischen Stellglieder erst bei Betätigung der Lenkung über ein mit dem Lenkrad bzw. dessen Lenksäule gekoppeltes hydraulisches Lenkventil je nach Richtung des Lenkeinschlages in die eine oder in die andere Richtung mit einem sich dabei aufbauenden Hydraulikdruck beaufschlagt werden.

Wesentlicher Vorteil solcher mit einem vergleichsweise niedrigen Druckniveau betreibbaren Servo-Lenkeinrichtungen des Durchflußtyps ist, daß im Gegensatz zu mit vergleichsweise hohen Systemdrücken arbeitenden Servo-Lenkeinrichtungen des Speichertyps keine aufwendigen und teuren hochdruckdichten Bauelemente benötigt werden, insbesondere keine hochdruckdichten Lenkventile. Zwar benötigen Servo-Lenkeinrichtungen des Durchflußtyps leistungsfähigere Hydropumpen als Lenkeinrichtungen des Speichertyps, weil diese jeweils spontan die von der Servo-Lenkeinrichtung gestellten Forderungen erfüllen müssen. Doch ist dieser größere Aufwand im Hinblick darauf, daß zum einen kein Druckspeicher und zum anderen keine hochdruckdichten Bauelemente für den Hydraulikkreis benötigt werden, vernachlässigbar und unbeachtlich.

Moderne Kraftfahrzeuge werden trotz tendenziell ansteigender Motorleistung immer kompakter, d. h. raumsparender gebaut; die sich dabei mitunter ergebenden problematischen thermischen Verhältnisse im Aggregate- und Motorraumbereich des Fahrzeugs machen die Installation entsprechend hoher Lüfterleistungen für das Kühlsystem der Brennkraftmaschine erforderlich. Diese hohen Lüfterleistungen sind von elektrisch angetriebenen Lüftern, wie sie heute bevorzugt zur Anwendung kommen, mitunter nicht mehr aufzubringen, bzw. nur dann, wenn stärkere Lichtmaschinen und stärkere elektrische Bordnetze als üblich eingesetzt werden würden.

Der generell mögliche direkte mechanische Antrieb entsprechend leistungsstarker Lüfter stößt dagegen - insbesondere beim besonders kompakt bauenden Quereinbau des Antriebsaggregats - häufig auf Bauraumprobleme.

Es ist auch bereits bekannt, den Lüfter für das Kühlsystem einer Brennkraftmaschine hydraulisch, d. h. mittels eines Hydromotors anzutreiben, wodurch sich grundsätzlich - ähnlich wie mit elektrisch angetriebenen Lüftern - freizügigere konstruktive Gestaltungsmöglichkeiten beim Einbau des Lüfters in den Aggregate- und Motorraumbereich ergeben.

Bei einem bekannten Kraftfahrzeug mit hydraulisch angetriebenem Lüfter (DE-PS 36 26 013) wird der Lüfter von zwei auf der gleichen Lüfterachse angeordneten, als Tandemmotor ausgebildeten Hydromotoren angetrieben, die von einer von der Brennkraftmaschine angetriebenen Hydropumpe mit dem benötigten Hydrauliköl gespeist werden, wobei im unteren Drehzahlbereich der Brennkraftmaschine nur einer der beiden Hydromotoren für den Lüfterantrieb herangezogen ist, während der andere entweder abgekoppelt ist oder aber im Leerlauf mit umläuft. Der Systemdruck der Hydraulikanordnung ist dabei vergleichsweise hoch und wird durch eine in die Saugleitung der Hydropumpe eingeschaltete regelbare Drossel auf etwa 200 bar begrenzt.

Bei einem anderen bekannten Kraftfahrzeug (DE-OS 36 36 484) mit einem hydraulisch angetriebenen Lüfter sowie mit einer hydraulischen Servo-Lenkeinrichtung werden von der Brennkraftmaschine gleichzeitig zwei verschiedene Hydropumpen angetrieben, von denen die eine zur Versorgung der hydraulischen Servo-Lenkeinrichtung dient, während die als Mehrkreispumpe ausgebildete andere Hydropumpe die Hydrauliköl-Versorgung zum einen des Lüfter-Hydromotors und zum anderen einer hydraulischen Niveauregeleinrichtung und/oder eines hydraulischen Bremsdruckverstärkers übernimmt. Für die Hydrauliköl-Versorgung des Lüfter-Hydromotors ist außerdem eine elektromotorisch angetriebene weitere Hydropumpe vorgesehen, durch die der Hydromotor auch bei einem Abstellen der Brennkraftmaschine im Rahmen einer sogenannten Nachlaufsteuerung noch mit Hydrauliköl versorgt werden kann. Der Gesamtaufwand dieser bekannten Anordnung ist vergleichsweise groß.

Vor diesem Hintergrund liegt der Erfindung die Aufgabe zugrunde, ein auch an beengte bauräumliche Gegebenheiten gut anpaßbares, leistungsstarkes und trotzdem einfaches sowie kostengünstiges Lüftersystem für ein Kraftfahrzeug mit einer hydraulischen Servo-Lenkeinrichtung des Durchflußtyps der im Oberbegriff des Patentanspruchs 1 genannten Art zu schaffen.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Erfindungsgemäß weist also der Lüfter des Kühlsystems in an sich bekannter Weise einen hydraulischen Lüfterantrieb mit einem Hydromotor auf, der jedoch im Gegensatz zum Stand der Technik nicht von einer eigenen Hydropumpe gespeist wird, sondern von der sowieso bereits vorhandenen Hydropumpe der hydraulischen Servo-Lenkeinrichtung, wobei durch geschickte Gestaltung des Hydraulikkreises erreicht wird, daß dem Hydromotor des Lüfters in vorteilhafter Weise ein pumpendrehzahlproportionaler Hydraulikölstrom zugeführt wird, der hydraulischen Servo-Lenkeinrichtung dagegen in gewohnter und erforderlicher Weise ein konstanter Hydraulikölstrom.

Die erfindungsgemäße Anordnung zeichnet sich durch ihr bauraumsparendes und kostengünstiges Konzept aus, welches zur besseren Nutzung der für die hydraulische Servo-Lenkeinrichtung sowieso bereits installierten hydraulischen Leistung führt und den Vorteil besitzt, mit einem vergleichsweise geringen Systemdruck von z. B. bis zu 100 bar betrieben werden zu können. Ein solcher vergleichsweise niedriger Betriebsdruck ermöglicht auch den Einsatz konventioneller kostengünstiger Bauelemente, da der vergleichsweise niedrige Systemdruck bedeutend geringere Ansprüche an die Maßgenauigkeit sowie die Dichtigkeit dieser Bauelemente stellt. So können in vorteilhafter Weise für den Hydromotor konventionelle Zahnradpumpen eingesetzt werden, wie sie für Kraftfahrzeuge großserienmäßig als Schmierölpumpen gefertigt werden. Auch an das Lenkventil der hydraulischen Servo-Lenkeinrichtung werden keine erhöhten Anforderungen gestellt.

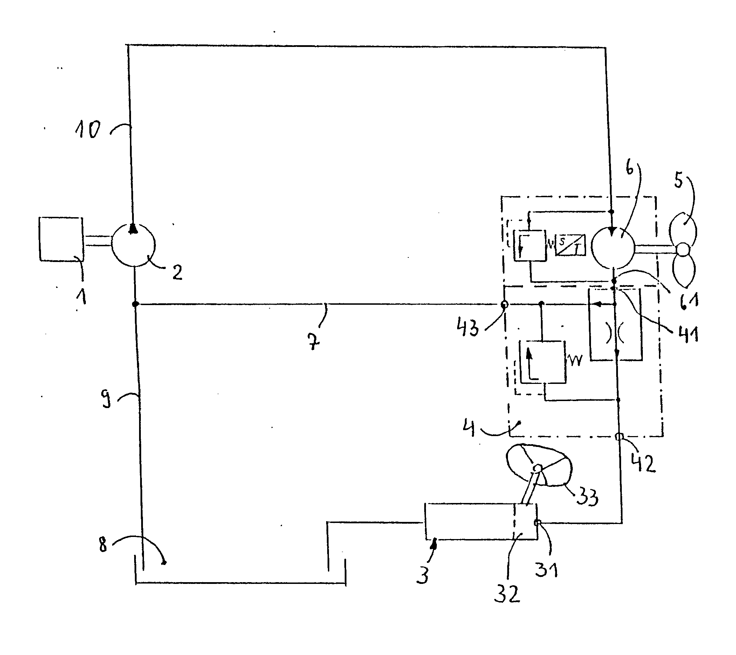

Anhand eines in der Zeichnung dargestellten Ausführungsbeispieles wird die Erfindung nachstehend näher erläutert.

Die einzige Figur der Zeichnung zeigt in vereinfachter und schematischer Darstellung den Hydraulikkreis eines Kraftfahrzeugs gemäß der Erfindung.

Eine Brennkraftmaschine 1 treibt eine Hydropumpe 2, vorzugsweise eine Flügelzellenpumpe an, die über eine Saugleitung 9 Hydrauliköl aus einem Vorratsbehälter 8 ansaugt und über eine Druckleitung 10 den ihr nachgeschalteten Hydraulikkreis speist.

Der Hydraulikkreis enthält zwei zueinander in Reihe geschaltete hydraulische Verbraucher, nämlich einen den Lüfter 5 des Kühlsystems der Brennkraftmaschine 1 antreibenden Hydromotor 6 sowie die hydraulische Servo-Lenkeinrichtung 3 des Fahrzeugs, d. h. genauer gesagt deren hydraulischen Steuer- und Stellglieder.

Die hydraulische Servo-Lenkeinrichtung ist wie üblich ausgebildet, d. h. sie enthält ein mit dem Lenkrad 33 gekoppeltes hydraulisches Lenkventil, das mit 32 angedeutet ist, sowie ein oder mehrere mit dem Lenkgestänge bzw. den lenkbaren Rädern des Kraftfahrzeugs in Wirkverbindung stehende hydraulische Stellglieder, die bei Betätigung des Lenkrades 33 über das Lenkventil 32 gesteuert mit von der Hydropumpe 2 geliefertes Hydrauliköl beaufschlagt werden.

Zwischen dem Hydromotor 6 und der diesem nachgeschalteten hydraulischen Servo-Lenkeinrichtung 3 ist ein für sich bekannter hydraulischer Strom- und Mengenregler 4 angeordnet, dessen Eingang 41 mit dem Ausgang 61 des der Hydropumpe 2 nachgeschalteten Hydromotors 6 und dessen Ausgang 42 mit dem Eingang 31 der hydraulischen Servo-Lenkeinrichtung 3 bzw. dessen Lenkventils 32 verbunden ist.

Auf diese Weise wird dem den Lüfter 5 antreibenden Hydromotor 6 ein der Drehzahl der Hydropumpe 2 und damit auch der Drehzahl der Brennkraftmaschine 1 proportionaler Hydraulikölstrom zugeführt, während die hydraulische Servo-Lenkeinrichtung 3 vom Strom- bzw. Mengenregler 4 mit einem konstanten Hydraulikölstrom gespeist wird, so wie sie es benötigt.

Der den konstanten Hydraulikölstrom für die Servo-Lenkeinrichtung 3 übersteigende Teil des von der Hydropumpe 2 geförderten Hydraulikölstroms wird über einen Auslaß 43 des Strom- und Mengenreglers 4 abgeleitet und der Hydropumpe 2, bzw. deren Saugkammer bzw. Sauganschluß wieder über eine Druckleitung 7 zugeführt. Als Hydropumpe 2 und Strom- bzw. Mengenregler 4 werden vorzugsweise lediglich leicht modifizierte serienmäßige entsprechende Bauteile üblicher hydraulischer Servo-Lenkeinrichtungen des Durchflußtyps eingesetzt. Diese Servo-Lenkeinrichtungen werden üblicherweise von einer als Flügelzellenpumpe ausgebildeten Hydropumpe mit unmittelbar an der Pumpe angeflanschtem Strom- bzw. Mengenregler mit Hydrauliköl versorgt. Im vorliegenden Falle wird in vorteilhafter Weise eine solche an sich serienmäßige Flügelzellenpumpe ohne Mengenregler eingesetzt - wozu die serienmäßige Flügelzellenpumpe erforderlichenfalls baulich geringfügig abzuwandeln ist -, während der baulich von der Flügelzellenpumpe getrennte serienmäßige Strom- bzw. Mengenregler hydraulisch zwischen dem Hydromotor 6 und der hydraulischen Servo-Lenkeinrichtung angeordnet wird. Der Strom- bzw. Mengenregler 4 kann dabei mit Vorteil mit dem Hydromotor 6 zu einer baulichen Einheit zusammengefaßt werden.

## Patentansprüche

1. Kraftfahrzeug mit einem Lüfter (5) für das Kühlsystem seiner Brennkraftmaschine (1) und mit einer hydraulischen Servo-Lenkeinrichtung (3) des Durchflußtyps, welche von einer von der Brennkraftmaschine (1) angetriebenen Hydropumpe (2) unter Einsatz eines Strom- bzw. Mengenreglers (4) mit konstantem Hydraulikölstrom gespeist wird,
dadurch gekennzeichnet, daß der Lüfter (5) in an sich bekannter Weise einen hydraulischen Lüfterantrieb mit Hydromotor (6) aufweist,
daß der Hydromotor (6) von der Hydropumpe (2) der hydraulischen Servo-Lenkeinrichtung (3) gespeist wird,
und daß Hydromotor (6), hydraulische Servo-Lenkeinrichtung (3) und Strom- bzw. Mengenregler (4) derart in Reihe geschaltet sind, daß dem Hydromotor (6) ein pumpendrehzahlproportionaler und der hydraulischen Servo-Lenkeinrichtung (3) ein konstanter Hydraulikölstrom zugeführt wird.

2. Kraftfahrzeug nach Anspruch 1,
dadurch gekennzeichnet, daß der Eingang (41) des Strom- bzw. Mengenreglers (4) mit dem Ausgang (61) des der Hydropumpe (2) nachgeschalteten Hydromotors (6) und der Ausgang (42) des Strom- bzw. Mengenreglers (4) mit dem Eingang (31) der dem Hydromotor (6) nachgeschalteten hydraulischen Servo-Lenkeinrichtung (3) verbunden ist,
und daß der Auslaß (43) des Strom- bzw. Mengenreglers (4), über den der den konstanten Hydraulikölstrom für die hydraulische Servo-Lenkeinrichtung (3) übersteigende Teil des von der Hydropumpe (2) geförderten Hydraulikölstroms abgeleitet wird, über eine Druckleitung (7) mit der Saugkammer oder dem Sauganschluß der Hydropumpe (2) unmittelbar in Verbindung steht.

3. Kraftfahrzeug nach Anspruch 1 oder 2,
dadurch gekennzeichnet, daß der Strom- bzw. Mengenregler (4) mit dem Hydromotor (6) eine bauliche Einheit bildet.

4. Kraftfahrzeug nach einem der Ansprüche 1 bis 3,
dadurch gekennzeichnet, daß als Hydropumpe (2) eine Flügelzellenpumpe und als Hydromotor (6) ein hydraulischer Zahnradmotor vorge-sehen ist.